# EUROPEAN PATENT APPLICATION

(11) **EP 1 134 067 A2**
(43) Date of publication of application: **19.09.2001**
(21) Application number: 01105071.3
(22) Date of filing: 02.03.2001
(51) Int. Cl.: B29C 49/50

(54) **Device and method for cutting out a valve connection in a blow moulded bulk container**

(30) Priority: 07.03.2000 IT MI000442
(71) Applicant: Uniloy Milacron S.R.L., 20136 Milano (IT)
(72) Inventor: Bertolotti, Luca, 20080 Ozzero (Milano) (IT)
(74) Representative: Petruzziello, Aldo

(57) **Abstract**

A finishing device (8) for finishing a connection (5) for an emptying valve of blow-moulded industrial bulk containers (1) comprises a perforating tool (10), positioned inside a part (7) of the mould (6) suitable for formation of the connection (5) of the emptying valve of the container (1), said tool being able to perforate the wall of the container (1) inside said emptying valve connection (5) of the container and being driven by means of a hydraulic or pneumatic actuator.

## Description

The present invention refers to a device and a method for finishing a connection for an emptying valve in blow-moulded large industrial containers. The present invention refers in particular to containers such as industrial bulk containers (IBC), which are approved for the transport of hazardous products, according to United Nations standards (UN standards).

IBC of various shapes and sizes are available on the market, the most common one having a capacity of one cubic metre. The IBC is a container in the true sense, generally made by blow-moulding high-density polyethylene and comprising a steel reinforcing cage, which ensures a certain structural resistance to bumping and stacking.

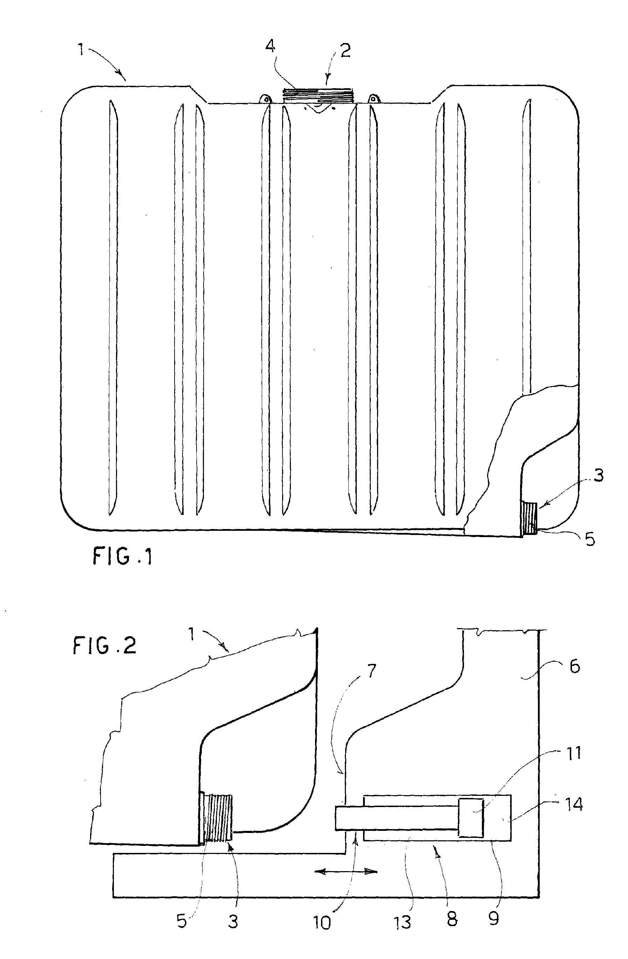

With reference to Figure 1, an IBC is shown and designated as a whole by reference numeral 1. Two openings 2 and 3 are formed in the container 1.The opening 2, generally disposed in the central part of the upper wall of the container, is normally used for filling the container. The opening 2 has a tang 4 with an outer thread to receive a cover.

The opening 3, generally smaller than the opening 2, is generally disposed in the bottom part of a side wall of the container 1. The opening 3 has a valve connection 5 to receive a ball valve (not shown) for emptying of the container 1.

According to the prior art, the opening 2 is made directly during blow moulding by means of an injection nozzle. The valve connection 5, on the other hand, is made blind to allow the container to be formed by blowing inside a mould. Once the blow-moulding operation has been completed, the container 1 is removed from the mould and sent for a subsequent finishing operation, in which the opening 3 of the valve connection 5 is made.

This method according to the prior art has various drawbacks.

In fact, after blowing of the container, an additional finishing operation takes place. This involves operations of moving and positioning the container, which are generally performed manually, with consequent errors in positioning and waste of labour. Furthermore, additional devices are needed for centring of the opening 3 which must be made in the valve connection 5. Lastly, this finishing stage causes excessive scraps and production of chips inside the container, resulting in containers that do not have a perfectly clean inside surface.

An object of the invention is to eliminate said drawbacks, providing a device and a method for finishing the valve connection of industrial bulk containers that allow said finishing operation to be carried out directly during the blowing operation in a precise and efficient manner.

This object is achieved in accordance with the invention with the characteristics listed in appended independent device claim 1 and in appended independent method claim 10.

Preferred embodiments of the invention are apparent from the dependent claims.

The present invention provides a perforating device or punch for finishing the opening of the emptying valve connection of a blow-moulded bulk container. Said punch is positioned directly in the mould in which blowing of the container takes place, in register with the valve connection in which the opening is to be made.

The advantages of said solution are apparent, in that it allows the further stage of finishing of a container that took place after blow moulding to be eliminated. In this manner operations of moving and positioning the container are no longer necessary, nor are centring means for perforation of the opening of the emptying valve connection of the container necessary.

There is greater precision in the formation of the diameter of the hole in the valve connection and less eccentricity of said hole with respect to the valve connection, because all the errors in positioning of the piece, typical of the perforating stage, are eliminated. Moreover, said method ensures that the inside of the container is perfectly clean, without the production of scraps and chips typical of the perforating stage.

Further characteristics of the invention will be made clearer by the detailed description that follows, referring to a purely exemplary and therefore non-limiting embodiment thereof, illustrated in the appended drawings, in which:
Figure 1 is a side elevational view of an industrial bulk container (IBC);
Figure 2 is a broken-away side view, diagrammatically showing the inside of a mould with the finishing device according to the invention at the moment of perforation of a valve connection of a container;
Figure 2a is an enlarged view of a detail of Figure 2;
Figure 3 is an enlarged, axonometric view, diagrammatically showing a tool of the finishing device for the valve connection in Figure 2.

A device and a method according to the invention for finishing a connection for an emptying valve in a blow-moulded industrial bulk container are described with the aid of the figures. Reference is made to a container substantially similar to the container 1 described previously.

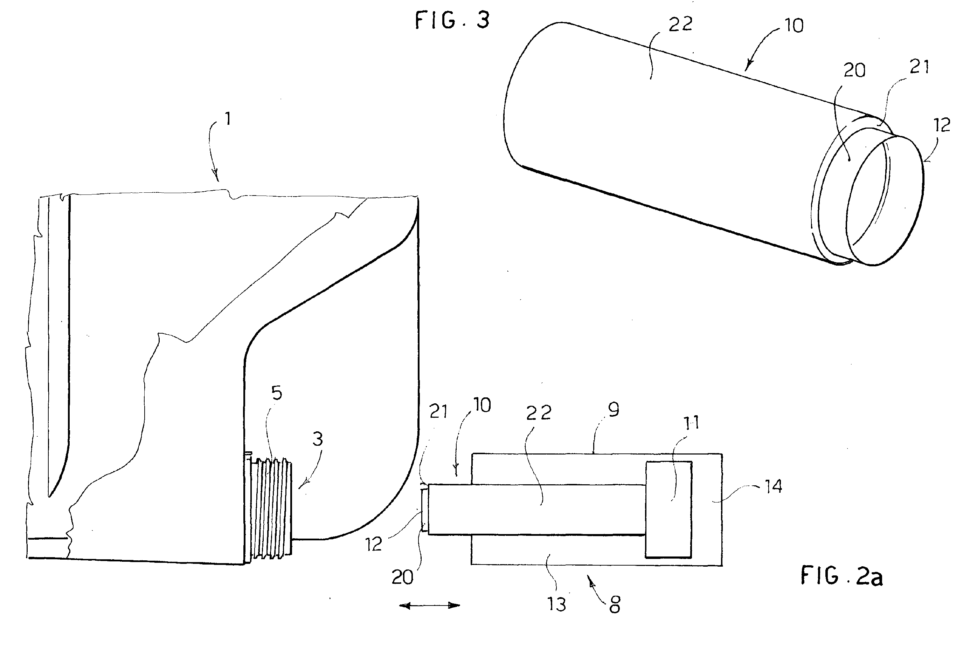

A hollow body or parison of plastic material is inserted in a cavity between two mould halves, of which only one mould half 6 can be seen in Figure 2. The moulds halves are closed and compressed air is blown into the parison through a blowing nozzle, so that the parison conforms to the shape of the walls of the mould in order to obtain a container substantially similar to the container 1 described previously. The blowing nozzle is inserted in the parison through a top opening 2 and an inside upper surface of the mould has such a shape as to form a threaded connection 4 for a cover for the opening 2.

As shown in Figure 2, a part 7 near a bottom corner of the half-mould 6 has such a shape as to form a threaded connection 5 in the container 1, able to receive an emptying valve. The threaded connection 5 has a tang shape and is closed on the inside precisely because it is obtained by means of blow-moulding and therefore by means of expansion of the plastic material forming the initial parison.

A perforating device or punch 8 is situated near the part 7 of the mould half 6. As better shown in Figure 2a, the perforating device 8 consists of a hydraulic or pneumatic actuator comprising a piston 11 that can move with a reciprocating motion inside a cylinder 9. The cylinder 9 is mounted inside the part 7 of the mould half 6 intended to form the connection 5 of the emptying valve of the container 1.

The piston 11 supports a perforating tool 10 having a substantially cylindrical shape. As shown in Figures 2a and 3, the perforating tool 10 comprises a body 22 and an end part 20 that are coaxial with each other. The end part 20 is hollow on the inside and has a cutting edge 12. The end part 20 has a substantially annular cross section with a thin edge so as to be able to cut the plastic material forming the container 1.

The end part 20 has a slightly smaller outside diameter than the outside diameter of the body 22 so that an annular abutment surface 21 is formed between the two, destined to abut against the wall of the valve connection 5 of the container 1 during the cutting operation.

The outside diameter of the cylindrical tool 10 is smaller than the diameter of the cylinder 9 since it must slide therein. The outside diameter of the end part 20 is smaller than the inside diameter of the connection 5 of the emptying valve of the container, since it must penetrate therein to perforate the wall of the container 1. The axis of the tool 10 corresponds substantially to the axis of the connection 5 of the emptying valve of the container 1, when the container 1 is blown inside the mould.

The piston 11 divides two chambers 13 and 14 in the cylinder 9 which can be filled with fluid under pressure to move the piston 11. The movement of the piston 11 inside the cylinder 9 allows the perforating tool 10 to reach three positions: a retracted position in which the tool 10 is inside the cylinder 9, an intermediate position, in which the end of the tool 10 protrudes slightly out of the cylinder 9 and an extended position, in which the tool 10 protrudes almost completely out of the cylinder 9.

During blow-moulding the perforating tool 10 is in the retracted position in order not to interfere with the formation of the connection 5 of the emptying valve of the container 1.

At the end of the blowing stage of the container 1, when the plastic material in contact with the walls of the mould has already reached a certain mechanical consistency through the effect of cooling, the chamber 14 is pressurized. Consequently there is a pre-advancement of the piston 11 which moves the tool 10 from its retracted position to the intermediate position, in which the cutting edge 12 of the end part 20 of the tool 10 is proximate the wall of the container 1 that it must perforate, inside the connection 5. The chamber 14 is then further pressurized, causing a further advancement of the piston 11 which moves the tool 10 into its extended position, causing perforation of the wall of the container 1 inside the connection 5. Said perforation is carried out with extreme precision, since the tool 10 is perfectly coaxial with the axis of the connection 5. Furthermore a clean cut is achieved without scraps or tearing of the round disc of the wall of the container 1, since the plastic material is still sufficiently malleable during cooling. The round disc of the wall of the container removed by the perforating tool 10 falls inside the container 1 and is subsequently removed.

At this point the chamber 13 is pressurized so as to cause withdrawal of the piston 11 and thus the tool 10 returns to its retracted position.

Suitable setting of the times of pre-advancement, advancement and withdrawal of the piston 11 makes it possible to obtain a perfectly finished container 1 without any tearing or creation of weak points near the connection 5 for the emptying valve, in which the disc of container wall is removed.

Various modifications and variations of detail within the reach of a person skilled in the art can be made to the present embodiment of the invention without departing from the scope of the invention set forth in the appended claims.

## Claims

1. A finishing device (8) for a connection (5) for an emptying valve of blow-moulded industrial bulk containers (1), **characterized in that** it comprises a perforating tool (10) positioned inside a mould (6) for blow-moulding of the container (1), said tool being able to perforate the wall of the container (1) inside said connection (5) for the emptying valve of the container.

2. A finishing device (8) according to claim (1), **characterized in that** said perforating tool (10) is driven by actuator means.

3. A finishing device (8) according to claim 2, **characterized in that** said actuator means comprise a piston (11) on which said tool (10) is mounted, movable with a reciprocating motion inside a cylinder (9) provided inside the mould (6) near the part (7) of the mould (6) able to form said connection (5) for the emptying valve of the container (1).

4. A finishing device (8) according to claim 3, **characterized in that** inside said cylinder (9) two chambers (13, 14) that can be pressurized, hydraulically or pneumatically, for driving of said piston (11) are formed.

5. A finishing device (8) according to claim 3 or 4, **characterized in that** said perforating tool (10) can reach a retracted position inside said cylinder (9), wherein it is inside said cylinder (9), an intermediate position, wherein it protrudes slightly outside said cylinder (9), and an extended position wherein it protrudes almost completely outside said cylinder (9).

6. A finishing device (8) according to any one of the preceding claims, **characterized in that** said tool (10) has a thin, hollow end part (20) with a substantially cylindrical shape.

7. A finishing device (8) according to claim 6, **characterized in that** said end part has a substantially annular-shaped cutting edge (12).

8. A finishing device (8) according to claim 6 or 7, **characterized in that** the outside diameter of said end part (20) is slightly smaller than the outside diameter of said tool (10) so as to form an annular shoulder (21) able to abut against the wall of said connection (5) of the emptying valve of the container during the cutting operation.

9. A finishing device (8) according to any one of the claims 6 to 8, **characterized in that** the outside diameter of said end (20) of the cutting device (10) is slightly smaller than the inside diameter of said connection (5) of the emptying valve of the container (1) and said tool (10) is substantially coaxial with said connection (5) of the emptying valve of the container (1).

10. A finishing method for finishing a connection (5) for an emptying valve for blow-molded industrial bulk containers (1) comprising the following steps:
- positioning a parison inside a mould (6)
- blowing the parison, so as to form an industrial bulk container (1) inside the mould (6), said container comprising a connection (5) for an emptying valve,
**characterized in that**, at the end of the blowing step said connection (5) for the emptying valve of the container is perforated, by means of a perforating device (8) positioned directly inside said mould (6).

11. A method according to claim 10, **characterized in that** said step of perforating said connection (5) for the emptying valve of the container includes advancing a perforating tool (10) with a substantially cylindrical hollow shape so as to cut a disc of container wall inside said connection (5) for the emptying valve.

12. A blow-moulded industrial container (1) comprising an opening (2) for filling and a connection (5) for an emptying valve, **characterized in that** said connection (5) is already perforated when the container (1) leaves the mould.
